# FASCICULE DE BREVET EUROPEEN

(11) **EP 3 489 499 B1**
(45) Date de publication et mention de la délivrance du brevet: **04.08.2021**
(21) Numéro de dépôt: 18204991.6
(22) Date de dépôt: 07.11.2018
(51) Int. Cl.: F02K 1/82, F02C 7/24, F01D 25/24

(54) **STRUCTURE INTERNE D'UN CONDUIT D'ÉJECTION PRIMAIRE**
INNENSTRUKTUR EINES PRIMÄREN AUSSTOSSROHRS
INTERNAL STRUCTURE OF A PRIMARY EJECTION CONDUIT

(30) Priorité: 28.11.2017 FR 1761255
(43) Date de publication de la demande: 29.05.2019
(73) Titulaire: Airbus Operations S.A.S., 31060 Toulouse (FR)
(72) Inventeur: KASSEM, Morad, 31300 TOULOUSE (FR); ANDRE, Sandrine, 31380 PAULHAC (FR); DE OLIVEIRA, Gregory, 31140 ST ALBAN (FR); KRIER, Erwan, 31470 FONSORBES (FR); KILKENNY, Michael, 31200 TOULOUSE (FR); BERTANDEAU, Laurent, 31170 TOURNEFEUILLE (FR)
(74) Mandataire: Gicquel, Olivier Yves Gérard

(56) Documents cités:
- EP-A1- 3 159 522
- EP-A2- 1 391 597
- US-A1- 2010 205 930

## Description

La présente invention concerne une structure interne d'un conduit d'éjection primaire d'une turbomachine, une turbomachine comportant une telle structure interne, ainsi qu'un aéronef comportant au moins une telle turbomachine.

Une turbomachine comporte classiquement, de l'amont vers l'aval, une entrée d'air par laquelle l'air entre dans la turbomachine, un moteur qui assure la combustion de l'air et du carburant, et un conduit d'éjection par lequel sont évacués les gaz brûlés.

Une telle turbomachine génère des bruits lors de son fonctionnement.

Pour atténuer une partie des bruits, la turbomachine est entourée d'une nacelle comportant des moyens atténuateurs de bruit, comme par exemple des structures en nid d'abeilles.

Les sons de basses fréquences (entre 300 Hz et 1000 Hz), notamment ceux liés à la combustion, émis par la turbomachine durant le décollage ou l'atterrissage forment une importante source de bruit pour l'environnement et pour atténuer ces bruits, il est connu de disposer des dispositifs atténuateurs de sons basses fréquences dans la structure du conduit d'éjection primaire (appelée « plug » en Anglais).

Le conduit d'éjection primaire est situé dans le prolongement du moteur et avant le cône de tuyère et sa paroi primaire extérieure est en contact avec le flux de gaz brûlé en provenance du moteur.

Le document US-A-7,784,283 divulgue la réalisation de compartiments séparés par des cloisons de séparation sous la paroi primaire perforée du conduit d'éjection primaire afin de constituer des résonateurs de Helmholtz.

On connait également les documents EP1391597 et EP3159522. Chacun de ces deux documents détaille un arrangement particulier d'une structure interne d'un conduit d'éjection primaire d'une turbomachine qui comporte des dispositifs d'atténuation des bruits de basses fréquences, conforme au préambule de la revendication 1.

De tels dispositifs sont efficaces, cependant il est nécessaire de trouver de nouveaux modes de réalisation.

Un objet de la présente invention est de proposer une structure interne d'un conduit d'éjection primaire d'une turbomachine qui comporte des dispositifs d'atténuation des bruits de basses fréquences qui soit simple et facile à mettre en œuvre.

A cet effet, est proposée une structure interne d'un conduit d'éjection primaire d'une turbomachine telle que revendiquée dans la revendication 1.

La fixation particulière de la paroi intérieure facilite la construction de ladite structure interne et l'atténuation des fréquences choisies.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef selon l'invention,
la Fig. 2 est une vue en perspective d'un conduit d'éjection primaire,
la Fig. 3 est une vue en perspective d'une structure interne d'un conduit d'éjection primaire selon l'invention,
la Fig. 4 est un agrandissement d'un détail de la structure interne de la Fig. 3,
la Fig. 5 est une vue en perspective d'un exemple d'une entretoise mise en œuvre dans la structure interne selon l'invention, et
la Fig. 6 est une vue en coupe selon le plan VI de la Fig. 5 d'une entretoise selon une variante de l'invention.

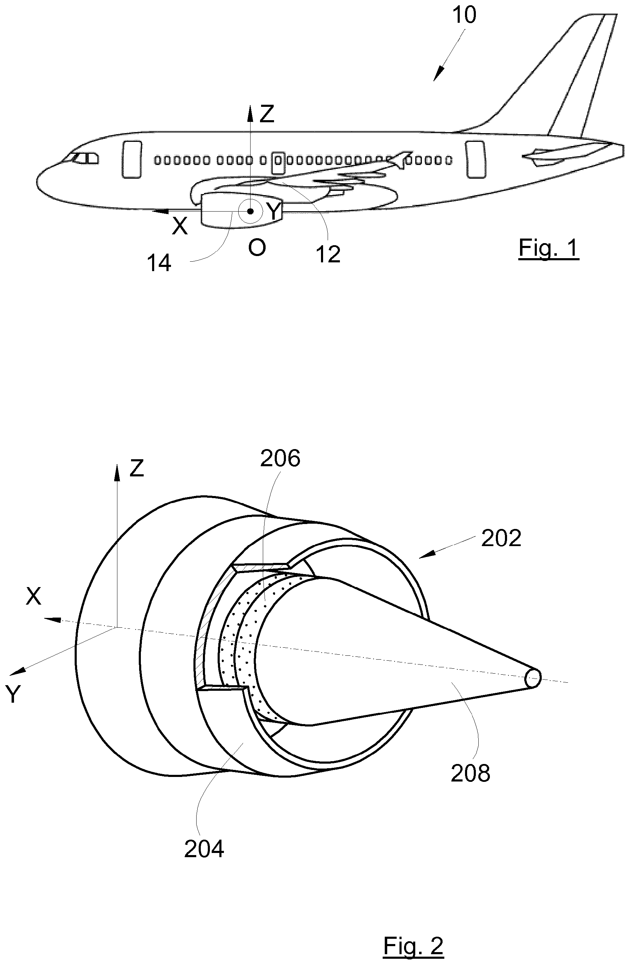

La Fig. 1 montre un aéronef 10 qui comporte une aile 12 sous laquelle est fixée une nacelle 14 dans laquelle est logée une turbomachine.

Dans la description qui suit, et par convention, on appelle X l'axe longitudinal de la turbomachine, orienté positivement dans le sens d'avancement de l'aéronef 10 et qui est également l'axe longitudinal de la nacelle 14, on appelle Y l'axe transversal qui est horizontal lorsque l'aéronef 10 est au sol, et Z l'axe vertical ou hauteur verticale lorsque l'aéronef 10 est au sol, ces trois directions X, Y et Z étant orthogonales entre elles et formant un repère orthonormé.

Dans la description qui suit, les termes relatifs à une position sont pris en référence au sens de déplacement des gaz dans la turbomachine c'est-à-dire de l'avant vers l'arrière de l'aéronef 10.

La Fig. 2 montre la partie arrière de la turbomachine qui forme un conduit d'éjection primaire 202 par lequel s'échappent les gaz brûlés par la turbomachine et qui est délimité à l'extérieur par une tuyère primaire 204 et à l'intérieur par une structure interne 206 du conduit d'éjection primaire 202.

Le conduit d'éjection primaire 202 comme sa structure interne 206 ont une forme générale consistant en des surfaces de révolution autour de l'axe longitudinal X de la turbomachine.

A l'arrière de la structure interne 206 est fixé un cône de tuyère 208.

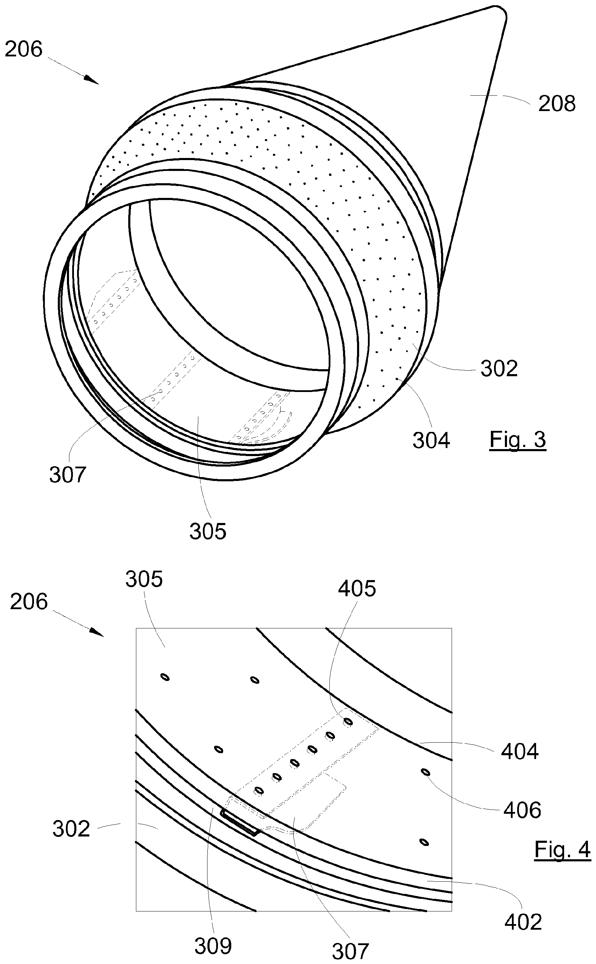

La Fig. 3 montre une vue de devant et en perspective et de la structure interne 206 et du cône 208, et la Fig. 4 montre un agrandissement de la structure interne 206.

La structure interne 206 comporte une paroi primaire 302 percée de trous 304 répartis sur la surface de la paroi primaire 302. La paroi primaire 302 forme la surface extérieure de la structure interne 206 c'est-à-dire celle qui forme la surface interne du conduit d'éjection primaire 202.

La structure interne 206 comporte une peau intérieure 305. La paroi primaire 302 et la peau intérieure 305 consistent chacune en une surface de révolution qui est, dans cet exemple, globalement cylindrique et la peau intérieure 305 est agencée à l'intérieur de la paroi primaire 302 de manière à constituer un ensemble de deux surfaces coaxiales.

La fixation de la peau intérieure 305 à la paroi primaire 302 est assurée par des entretoises 307 fixées entre la paroi primaire 302 et la peau intérieure 305 et réparties angulairement sur le pourtour de la peau intérieure 305. Les entretoises 307 sont vues en transparence sur les Figs. 3 et 4.

La peau intérieure 305 s'étend entre un flanc amont 402 orienté vers l'avant de la turbomachine et un flanc aval 404 orienté vers l'arrière de la turbomachine. Chaque flanc 402, 404 prend ici la forme d'une couronne.

Comme le montre la Fig. 4, la peau intérieure 305 et la paroi primaire 302 ne sont pas fixées l'une à l'autre. C'est-à-dire que chacun des flancs 402 et 404 de la peau intérieure 305 est à distance de la paroi primaire 302 de manière à laisser libre un passage 309 qui permet la libre circulation de l'air entre la peau intérieure 305 et la paroi primaire 302.

La peau intérieure 305 est ainsi fixée uniquement par les entretoises 307 ce qui facilite la mise en œuvre car il n'est pas nécessaire d'assurer la fixation entre la paroi primaire 302 et la peau intérieure 305. En outre, le passage 309 permet d'assurer une meilleure absorption des sons du fait des vibrations de la paroi intérieure 305 induites par le fait que ses flancs 402 et 404 ne sont pas fixés.

Entre deux entretoises 307 consécutives, le volume entre la paroi intérieure 305 et la paroi primaire 302 forme un caisson constituant un résonateur de Helmholtz.

Afin de permettre un démontage facile de la peau intérieure 305, les entretoises 307 sont fixées à la peau intérieure 305 à l'aide de moyens de fixation amovibles comme par exemple des vis et à cette fin, la peau intérieure 305 et l'entretoise 307 présentent des alésages 405 prévus à cet effet. Les moyens de fixation amovibles sont des éléments qui peuvent être démontés sans endommager la peau intérieure 305 et les entretoises 307.

La fixation de chaque entretoise 307 à la paroi primaire 302 peut être assurée par des moyens de fixation amovibles comme des vis ou définitifs comme le soudage par exemple.

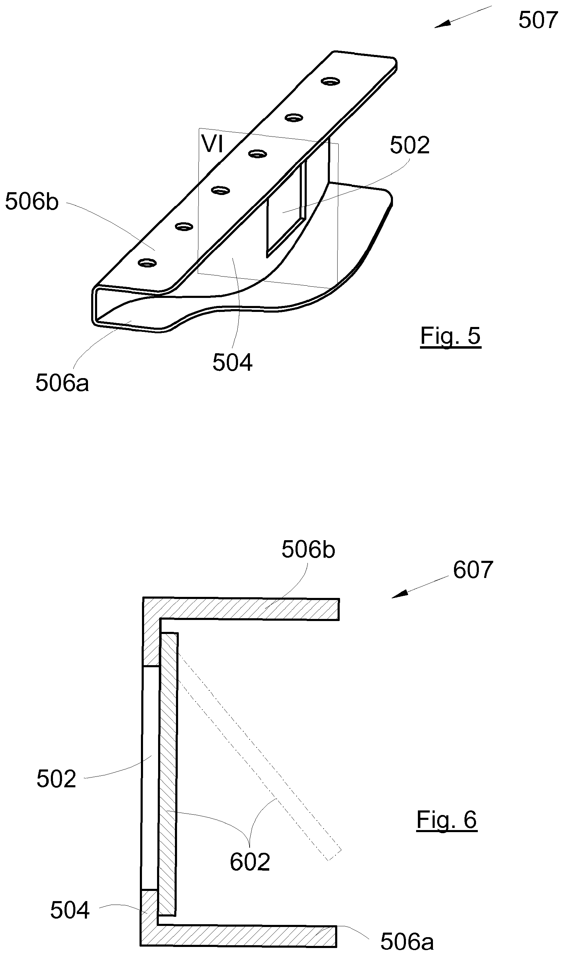

Dans le mode de réalisation de l'invention présenté sur les Figs. 3 à 6, chaque entretoise 307 prend la forme d'un profilé en C avec une paroi centrale (504 à la Fig. 5) et deux rabats (506a-b à la Fig. 5), mais d'autres formes sont possibles comme par exemple des piliers, ou des profilés de formes différentes.

Dans le cas d'une entretoise 307 ayant un profil en C, la fixation de l'entretoise 307 à la peau intérieure 305 et à la paroi primaire 302 s'effectue entre l'un des rabats 506a-b du profilé en C et selon le cas la peau intérieure 305 ou à la paroi primaire 302.

Selon un premier mode de réalisation de l'invention représenté à la Fig. 3, l'entretoise 307 prend la forme d'un profilé en C dont la paroi centrale 504 est pleine.

La Fig. 5 montre une entretoise 507 avec un profil en C selon un deuxième mode de réalisation particulier et la Fig. 6 montre une entretoise 607 avec un profil en C selon un troisième mode de réalisation particulier.

Dans le mode de réalisation de la Fig. 5, l'entretoise 507 présente une paroi centrale 504 qui présente un évidement traversant 502 afin d'assurer une meilleure communication entre les caissons.

Dans le mode de réalisation de la Fig. 6, l'entretoise 607 présente une paroi centrale 504 avec un évidement traversant 502 et un volet 602 qui est mobile sur l'entretoise 607 en fonction de la température entre une position fermée (en traits pleins) dans laquelle il obture l'évidement traversant 502 et une position ouverte (en traits mixtes) dans laquelle il n'obture pas l'évidement traversant 502. Ainsi, comme les fréquences des sons varient en fonction de la température, l'ouverture du volet 602 peut être adaptée à la température ambiante et permet ainsi une absorption optimale des sons quelle que soit la température. D'une manière générale, le volet 602 est prévu pour s'ouvrir lors d'une augmentation de température et se fermer lors d'une baisse de température.

Afin que le positionnement du volet 602 soit en accord avec la température, le volet 602 est constitué d'un alliage à mémoire de forme et de caractéristiques adaptées à la plage de température devant être couverte.

Afin d'assurer l'évacuation de l'eau qui peut s'infiltrer, la peau intérieure 305 est percée de trous de drainage 406.

La peau intérieure 305 est préférentiellement constituée par l'usinage d'un seul élément, mais elle peut également être constituée de plusieurs portions fixées les unes aux autres, en particulier par soudage.

## Revendications

1. Structure interne (206) d'un conduit d'éjection primaire (202) d'une turbomachine, ladite structure interne (206) comportant :
- une paroi primaire (302) consistant en une surface de révolution, laissant passer l'air à travers des orifices (304) et formant une surface interne du conduit d'éjection primaire (202),
- une peau intérieure (305) consistant en une surface de révolution, agencée à l'intérieur de la paroi primaire (302) et s'étendant entre un flanc amont (402) destiné à être orienté vers l'avant de la turbomachine et un flanc aval (404) destiné à être orienté vers l'arrière de la turbomachine, et
- une pluralité d'entretoises (307) réparties angulairement sur le pourtour de la peau intérieure (305) et fixées entre la paroi primaire (302) et la peau intérieure (305),
la structure interne (206) étant **caractérisée en ce que** chacun des flancs (402, 404) de la peau intérieure (305) est à distance de la paroi primaire (302) de manière à laisser libre un passage (309) entre la peau intérieure (305) et la paroi primaire (302), le passage (309) permettant la libre circulation de l'air entre la peau intérieure (305) et la paroi primaire (302).

2. Structure interne (206) selon la revendication 1, **caractérisée en ce que** les entretoises (307) sont fixées à la peau intérieure (305) à l'aide de moyens de fixation amovibles.

3. Structure interne (206) selon l'une des revendications 1 à 2, **caractérisée en ce que** chaque entretoise (307) prend la forme d'un profilé en C avec une paroi centrale et deux rabats.

4. Structure interne (206) selon la revendication 3, **caractérisée en ce que** la paroi centrale présente un évidement traversant (502).

5. Structure interne (206) selon la revendication 4, **caractérisée en ce que** l'entretoise (607) comporte un volet (602) mobile en fonction de la température entre une position fermée dans laquelle il obture l'évidement traversant (502) et une position ouverte dans laquelle il n'obture pas l'évidement traversant (502).

6. Structure interne (206) selon la revendication 5, **caractérisée en ce que** le volet (602) est constitué d'un alliage à mémoire de forme.

7. Structure interne (206) selon l'une des revendications 1 à 6, **caractérisée en ce que** la peau intérieure (305) est percée de trous de drainage (406).

8. Structure interne (206) selon l'une des revendications 1 à 7, **caractérisée en ce que** la peau intérieure (305) est constituée par l'usinage d'un seul élément.

9. Structure interne (206) selon l'une des revendications 1 à 7, **caractérisée en ce que** la peau intérieure (305) est constituée de plusieurs portions fixées les unes aux autres.

10. Turbomachine comportant un conduit d'éjection primaire (202) délimité à l'extérieur par une tuyère primaire (204) et à l'intérieur par une structure interne (206) selon l'une quelconque des revendications 1 à 9.

11. Aéronef (10) comportant au moins une turbomachine selon la revendication 10.

## Patentansprüche

1. Innenstruktur (206) eines primären Ausstoßrohres (202) einer Strömungsmaschine, wobei die Innenstruktur (206) aufweist:
- eine primäre Wand (302), die aus einer Rotationsfläche besteht, die Luft durch Öffnungen (304) hindurchströmen lässt und eine Innenfläche des primären Ausstoßrohres (202) bildet,
- eine Innenhaut (305), die aus einer Rotationsfläche besteht, im Inneren der primären Wand (302) angeordnet ist und sich zwischen einer stromaufwärtigen Stirnseite (402), die dazu bestimmt ist, dem vorderen Ende der Strömungsmaschine zugewandt zu sein, und einer stromabwärtigen Stirnseite (404), die dazu bestimmt ist, dem hinteren Ende der Strömungsmaschine zugewandt zu sein, erstreckt, und
- mehrere Distanzstücke (307), die über den Außenumfang der Innenhaut (305) winkelmäßig verteilt und zwischen der primären Wand (302) und der Innenhaut (305) befestigt sind,
wobei die Innenstruktur (206) **dadurch gekennzeichnet ist, dass** jede der Stirnseiten (402, 404) der Innenhaut (305) so in einem Abstand von der primären Wand (302) angeordnet ist, dass ein Durchgang (309) zwischen der Innenhaut (305) und der primären Wand (302) frei gelassen wird, wobei der Durchgang (309) das freie Strömen der Luft zwischen der Innenhaut (305) und der primären Wand (302) ermöglicht.

2. Innenstruktur (206) nach Anspruch 1, **dadurch gekennzeichnet, dass** die Distanzstücke (307) mithilfe von lösbaren Befestigungsmitteln an der Innenhaut (305) befestigt sind.

3. Innenstruktur (206) nach einem der Ansprüche 1 bis 2, **dadurch gekennzeichnet, dass** jedes Distanzstück (307) die Form eines C-Profils mit einer mittleren Wand und zwei Schenkeln aufweist.

4. Innenstruktur (206) nach Anspruch 3, **dadurch gekennzeichnet, dass** die mittlere Wand eine durchgehende Aussparung (502) aufweist.

5. Innenstruktur (206) nach Anspruch 4, **dadurch gekennzeichnet, dass** das Distanzstück (607) eine Klappe (602) aufweist, die in Abhängigkeit von der Temperatur zwischen einer geschlossenen Position, in welcher sie die durchgehende Aussparung (502) verschließt, und einer offenen Position, in welcher sie die durchgehende Aussparung (502) nicht verschließt, beweglich ist.

6. Innenstruktur (206) nach Anspruch 5, **dadurch gekennzeichnet, dass** die Klappe (602) aus einer Formgedächtnislegierung besteht.

7. Innenstruktur (206) nach einem der Ansprüche 1 bis 6, **dadurch gekennzeichnet, dass** die Innenhaut (305) mit Abflusslöchern (406) versehen ist.

8. Innenstruktur (206) nach einem der Ansprüche 1 bis 7, **dadurch gekennzeichnet, dass** die Innenhaut (305) durch die Bearbeitung eines einzigen Elements hergestellt ist.

9. Innenstruktur (206) nach einem der Ansprüche 1 bis 7, **dadurch gekennzeichnet, dass** die Innenhaut (305) aus mehreren Abschnitten besteht, die aneinander befestigt sind.

10. Strömungsmaschine, welche ein primäres Ausstoßrohr (202) aufweist, das außen von einer Primärdüse (204) und innen von einer Innenstruktur (206) nach einem der Ansprüche 1 bis 9 begrenzt wird.

11. Luftfahrzeug (10), welches mindestens eine Strömungsmaschine nach Anspruch 10 aufweist.

## Claims

1. Internal structure (206) of a primary exhaust duct (202) of a turbomachine, said internal structure (206) comprising:
- a primary wall (302) consisting of a surface of revolution allowing the air to pass through the orifices (304) and forming an internal surface of the primary exhaust duct (202),
- an interior skin (305) consisting of a surface of revolution arranged on the inside of the primary wall (302) and extending between an upstream flank (402) intended to face towards the front of the turbomachine and a downstream flank (404) intended to face towards the rear of the turbomachine, and
- a plurality of spacers (307) angularly distributed on the perimeter of the interior skin (305) and fixed between the primary wall (302) and the interior skin (305),
the internal structure (206) being **characterized in that** each of the flanks (402, 404) of the interior skin (305) is some distance away from the primary wall (302) so as to leave a free passage (309) between the interior skin (305) and the primary wall (302), the passage (309) allowing air to circulate freely between the interior skin (305) and the primary wall (302).

2. Internal structure (206) according to Claim 1, **characterized in that** the spacers (307) are fixed to the interior skin (305) using removable fixing means.

3. Internal structure (206) according to one of Claims 1 to 2, **characterized in that** each spacer (307) adopts the form of a C-section profile having a central wall and two flanges.

4. Internal structure (206) according to Claim 3, **characterized in that** the central wall has a through-opening (502).

5. Internal structure (206) according to Claim 4, **characterized in that** the spacer (607) comprises a flap (602) able to move as a function of the temperature between a closed position in which it closes off the through-opening (502) and an open position in which it does not close off the through-opening (502).

6. Internal structure (206) according to Claim 5, **characterized in that** the flap (602) is made of shaped memory alloy.

7. Internal structure (206) according to one of Claims 1 to 6, **characterized in that** the interior skin (305) is pierced with drainage holes (406).

8. Internal structure (206) according to one of Claims 1 to 7, **characterized in that** the interior skin (305) is formed by machining as a single piece.

9. Internal structure (206) according to one of Claims 1 to 7, **characterized in that** the interior skin (305) is made up of several portions fixed together.

10. Turbomachine comprising a primary exhaust duct (202) delimited on the outside by a primary jet pipe (204) and on the inside by an internal structure (206) according to any one of Claims 1 to 9.

11. Aircraft (10) comprising at least one turbomachine according to Claim 10.
